# EUROPÄISCHE PATENTSCHRIFT

(11) **EP 2 243 732 B1**
(45) Veröffentlichungstag und Bekanntmachung des Hinweises auf die Patenterteilung: **20.08.2014**
(21) Anmeldenummer: 10154085.4
(22) Anmeldetag: 19.02.2010
(51) Int. Cl.: B65G 57/00

(54) **Vorrichtung und Verfahren zum Überführen von Gebinde- oder Artikellagen in eine Beladestation**
Method and device for transferring groups or layers of articles to a loading station
Dispositif et procédé destinés à transférer des gerbes ou des couches d'articles dans une station de chargement

(30) Priorität: 23.04.2009 DE 102009003820
(43) Veröffentlichungstag der Anmeldung: 27.10.2010
(73) Patentinhaber: Krones AG, 93073 Neutraubling (DE)
(72) Erfinder: Kollmuss, Manuel, 93073 Neutraubling (DE); Kirschner, Peter, 93073 Neutraubling (DE)
(74) Vertreter: Benninger, Johannes

(56) Entgegenhaltungen:
- EP-A1- 0 548 519
- EP-A1- 0 560 112
- WO-A1-99/01345
- DE-A1-102007 063 286
- FR-A1- 2 610 290

## Beschreibung

Die vorliegende Erfindung betrifft eine Vorrichtung sowie ein Verfahren zum Überführen von gruppierten Lagen mit Gebinden und/oder Artikeln in eine Beladestation einer Transportvorrichtung.

Bekannt sind Vorrichtungen, die Gebindelagen von Gruppierstationen mittels eines Schiebers oder auch mit Vertikalhub zur Leistungssteigerung beim Rückhub in eine Beladestation oder einen Jalousiegreiferkopf einschieben. Derartige Jalousiegreiferköpfe eignen sich besonders zum präzisen und schonenden Palettieren von Artikeln und Gebinden wie bspw. Schrumpfgebinde und Kartonagen in ganzen Lagen. Diese zu palettierende Lage wird zuvor von einer Gruppierstation vorbereitet und anschließend mittels eines geeigneten Transportsystems in den Jalousiegreiferkopf überführt, wo sie durch einen Rollenteppich und seitlich angebrachte Zentriergeländer gehalten wird. Um die Lage abzusetzen, öffnet sich der Rollenteppich nach beiden Seiten.

Da mehrere aufeinander gestapelte und zu Paletten zusammengestellte Gebinde- oder Artikellagen normalerweise durch geeignete Zwischenlagen voneinander separiert und stabilisiert werden müssen, wird nach jedem Ablegen einer neuen Lage auf die Palette eine Zwischenlage aufgelegt, die eine Auflagefläche für die nächste abzulegende Gebindelage bildet. Diese Zwischenlagen können durch passend zugeschnittene Kartonbögen oder auch durch ausreichend stabile Folienschichten o. dgl. gebildet werden.

Aus der DD 216 693 A1 ist ein Palettierer zum Stapeln von leicht verrutschenden Gegenständen bekannt, der eine Traverse und einen Stapelkopf für lagenweises Stapeln von oben umfasst. Als Rutschsicherung werden mittels einer Übergabevorrichtung von einem Magazin Zwischenlagen auf eine Stapellage eingebracht. Das Magazin für die Zwischenlagen und die Vorrichtung zur Übergabe sind an einer den Stapelkopf tragenden Traverse des Palettierers angeordnet.

Die DE 42 07 808 A1 beschreibt ein Verfahren und eine Vorrichtung zum Zuführen von dünnen Zwischenlagen zu einem Stapel aus Gegenständen wie Kartons, die lagenweise auf einer Palette gestapelt werden, wobei zwischen übereinander angeordneten Lagen eine Zwischenlage eingelegt wird, deren Zuschnitt von einer fortlaufenden Materialbahn abgetrennt wird. Die Materialbahn wird abschnittsweise entsprechend der Abmessung eines Zuschnitts für eine Zwischenlage gefördert, anschließend außerhalb des Bereichs des Stapels ein Zuschnitt für eine Zwischenlage abgetrennt und diese danach weitertransportiert sowie auf dem (Teil-)Stapel bzw. der Lage abgelegt.

Die DE 201 20 699 U1 offenbart weiterhin eine Palettiereinrichtung mit drei getrennten Palettiergeräten mit Einzelfunktionen zum Aufbau der Palette aus einem Bodenteil, mehreren Lagen Palettiergut, Zwischenlagen und einem Deckel.

Aus der DE 10 2004 031 301 B4 ist eine weitere Vorrichtung zum Einbringen von Zwischenlagen beim Palettieren von Verpackungsschachteln auf Paletten in einem Palettierautomaten bekannt. Die Vorrichtung umfasst einen ersten Arbeitsbereich zur Aufnahme einer Zwischenlage und einen zweiten Arbeitsbereich zum Ablegen der Zwischenlage, eine Hub-, eine Zentrier- und eine Faltvorrichtung. Die Zwischenlage wird in dem ersten Arbeitsbereich von der Hubvorrichtung aufgenommen, dann in die Zentriervorrichtung transportiert sowie von dieser zentriert. Nach dem Zentrieren wird die Zwischenlage in den zweiten Arbeitsbereich auf die dort vom Palettierautomaten gestapelten Verpackungsschachteln abgelegt.

Gemeinsames Merkmal der bekannten Vorrichtungen zur Handhabung und zum Ablegen von Zwischenlagen auf Palettierlagen ist der nicht unerhebliche Zeit- und Handlingsaufwand sowie der notwendige Platzbedarf für die Handhabungseinrichtungen.

Durch EP 0 548 519 A1 ist bekannt, eine Lage von Artikeln nach und nach aus Reihen von Artikeln zu gruppieren. Die Reihen von Artikeln werden dabei von einem Einlaufförderer, der einen Stapelplatz tangiert, bereitgestellt. Die Reihen von Artikeln werden vermittels einer Transporteinrichtung quer vom Einlaufförderer abgeschoben. Dabei wird gleichgetaktet mit dem Abschieben einer ersten Reihe von Artikeln vom Einlaufförderer eine Zwischenlage unter und eine Zwischenlage über der Reihe von Artikeln zugeführt. Gleichgetaktet mit dem Überschieben der Zwischenlagen wird anschließend vom Einlaufförderer Reihe von Artikeln um Reihe von Artikeln abgeschoben und dadurch während des Überschiebens vom Einlaufförderer zum Stapelplatz eine Lage von Artikeln zwischen den Zwischenlagen gebildet. Ist die Lage von Artikeln komplett, wird der Stapelplatz mitsamt des bis dato hierauf errichteten Stapels höhenverstellt, um eine neue Lage von Artikeln nach und nach als oberste Stapellage am Stapelplatz zu gruppieren.

Durch DE 10 2007 063 286 A1 ist bekannt, bei einer Beladestation umfassend einen Jalousiegreiferkopf unter dem Rollenteppich des Jalousiegreiferkopfs eine Fixiereinrichtung zum Fixieren einer Zwischenlage vorzusehen, so dass die Zwischenlage beim Ablegen einer vermittels der Beladestation zum Stapelplatz transportierten gruppierten Lage von Artikeln unter dieser platziert wird. Die Zwischenlagen werden hierbei bei geschlossenem Rollenteppich von unterhalb der Beladestation der Beladestation zugeführt, vor, nach oder während diese mit einer gruppierten Lage von Artikeln beladen wird, die oben auf den geschlossenen Rollenteppich eingebracht werden. Das Ablegen am Stapelplatz erfolgt durch Loslassen der Zwischenlage, wodurch diese zunächst am Stapelplatz abgelegt wird, und durch Wegziehen des Rollenteppichs, wodurch die transportierte, gruppierte Lage von Artikeln von oben auf die Zwischenlage abgelegt wird.

Der Erfindung liegt die Aufgabe zugrunde, eine verbesserte, Platz und Zeit sparende Möglichkeit der Zuführung und/oder Ablage von Zwischenlagen zu Gebindelagen zu schaffen, welche die Nachteile des Standes der Technik vermeidet.

Diese Aufgabe wird dadurch gelöst, dass die Zwischenlage der Gebindelage während ihrer Überführung in eine Beladestation zugeführt wird. So umfasst die vorliegende Erfindung eine Vorrichtung zum Überführen von gruppierten Gebinde- und/oder Artikellagen in eine Beladestation einer Transportvorrichtung, die eine Zuführeinrichtung für ein flächiges Auflageelement zur Anordnung unterhalb der jeweiligen Gebinde- bzw. Artikellage bei deren Überführung in die Beladestation aufweist.

Nach ihrer Überführung in die Beladestation ist die gruppierte Gebinde- bzw. Artikellage auf der Zwischenlage und innerhalb der Beladestation abgelegt.

Die Beladestation ist durch einen Jalousiegreiferkopf gebildet, der eine Vielzahl von Rollen aufweist, die in der Beladestation eine Auflage für das flächige Auflageelement sowie die jeweils darauf abgelegte Gebinde- bzw. Artikellage bilden. Dem Fachmann sind jedoch auch andere Arten von Beladestationen geläufig, die im vorliegenden Zusammenhang zum Einsatz kommen können, bspw. sog. Plattenköpfe, bei denen die Gebinde- bzw. Artikellagen auf horizontal verschiebbare Platten abgelegt werden können, von denen aus sie zum Entladen bzw. Depalettieren entweder seitlich verschoben oder durch beidseitiges Öffnen der Platten nach unten abgesetzt werden können. Wenn im vorliegenden Zusammenhang von Beladestationen die Rede ist, so sind damit Jalousiegreiferköpfe umfasst.

Das flächige Auflageelement kann wahlweise durch einen Kartonbogen oder durch einen Folienbogen oder ein anderes geeignetes flächiges Element gebildet sein. So kann die Vorrichtung entweder eine Rolle zur Endloszuführung einer kontinuierlich abgewickelten Bahn aufweisen, wobei der von der Rolle abgewickelten Bahn eine Vereinzelungseinrichtung zur Abtrennung von flächigen Auflageelementen in passender Größe vor deren Platzierung in der Beladestation bzw. im Jalousiegreiferkopf zugeordnet ist.

Alternativ hierzu kann die Vorrichtung auch ein Reservoir mit einer Mehrzahl von flächigen Auflageelementen passender Größe zu deren vereinzelter Zuführung zur Beladestation bzw. zum Jalousiegreiferkopf aufweisen.

Die Zuführeinrichtung für die flächigen Auflageelemente kann in besonders Platz sparender Weise unterhalb einer Transportebene für die gruppierten Gebinde- bzw. Artikellagen angeordnet sein. Vorzugsweise kann die Zuführrichtung für die flächigen Auflageelemente in die Beladestation bzw. den Jalousiegreiferkopf einen spitzen Winkel mit einer Transportrichtung der gruppierten Gebinde- bzw. Artikellagen einschließen, so dass die Auflageelemente bzw. Zwischenlagen von schräg unten in Transportrichtung zugeführt und so in die Beladestation bzw. in den Jalousiegreiferkopf gefördert werden, dass unmittelbar nach oder gleichzeitig mit dem Zuführen der Zwischenlage die Gebindelage in den Jalousiegreiferkopf gefördert wird, wobei sie auf der Zwischenlage bzw. auf dem flächigen Auflageelement zum Liegen kommt. Wahlweise kann es jedoch auch sinnvoll sein, die Auflageelemente bzw. Zwischenlagen derart von einer seitlichen Richtung oder von schräg unten entgegen der, quer zur oder in Transportrichtung zuzuführen und in die Beladestation bzw. in einen Jalousiegreiferkopf oder einen Plattenkopf o. dgl. zu fördern und dort zu platzieren, dass sie dort als Auflage zum Liegen kommt und erst anschließend mit der gruppierten Gebinde- bzw. Artikellage beaufschlagt wird. Um zu Verhindern, dass die Zwischenlage beim Beschicken mit der Lage von gruppierten Artikeln oder Gebinden verrutscht, können ggf. Klemmelemente o. dgl. vorgesehen sein, die für eine Fixierung der Zwischenlage bzw. Auflageelemente in der Beladestation sorgen können.

Die Erfindung betrifft gleichermaßen ein Verfahren zum Überführen von gruppierten Gebinde- und/oder Artikellagen in eine Beladestation einer Transportvorrichtung, bei dem die gruppierten Gebinde- bzw. Artikellagen bei ihrer Überführung in die Beladestation auf ein flächiges Auflageelement abgelegt werden, das unterhalb der jeweiligen Gebinde- bzw. Artikellage angeordnet wird. Die Überführung oder Platzierung der gruppierten Gebinde- oder Artikellagen erfolgt im Zusammenhang mit der Überführung des flächigen Auflageelements in die Beladestation. Nach ihrer Überführung in die Beladestation ist die gruppierte Gebinde- bzw. Artikellage auf der Zwischenlage und innerhalb der Beladestation abgelegt und wird gleichzeitig transportiert. Die gruppierten Gebinde- bzw. Artikellagen werden im Zusammenhang mit ihrer Überführung in die Beladestation auf das flächige Auflageelement abgelegt, das dabei unterhalb der jeweiligen Gebinde- bzw. Artikellage angeordnet wird. Diese Abfolge der Beladung der Beladestation kann bei allen Arten von Beladestationen sinnvoll eingesetzt werden, bspw. bei Jalousiegreiferköpfen oder bei sog. Plattengreifern o. dgl. Erfindungsgemäß ist jedoch vorgesehen, dass das flächige Auflageelement gemeinsam und annähernd gleichzeitig mit den gruppierten Gebinde- bzw. Artikellagen in die Beladestation eingebracht und überführt wird. Dies eignet sich bei Jalousiegreiferköpfen, deren Auflagefläche durch Rollenelemente gebildet ist, da hierbei eine gemeinsame Beladung durch die Rollenelemente besonders gut unterstützt wird.

Bei dem Verfahren kann das flächige Auflageelement durch einen Kartonbogen und/oder durch einen Folienbogen gebildet werden.

Wahlweise können die Auflageelemente kontinuierlich von einer Rolle abgewickelt und vor ihrer Platzierung in der Beladestation bzw. im Jalousiegreiferkopf vereinzelt werden. Alternativ hierzu können die Auflageelemente passender Größe auch einzeln aus einem Reservoir entnommen und der Beladestation bzw. dem Jalousiegreiferkopf zugeführt werden.

Vorzugsweise werden die flächigen Auflageelemente von unterhalb einer Transportebene für die gruppierten Gebinde- bzw. Artikellagen zugeführt. So kann eine Zuführrichtung für die flächigen Auflageelemente in die Beladestation bzw. den Jalousiegreiferkopf einen spitzen Winkel mit einer Transportrichtung der gruppierten Gebinde- bzw. Artikellagen einschließen.

Auch für das erfindungsgemäße Verfahren gilt wiederum das oben Gesagte, nach dem die Beladestation durch die unterschiedlichsten Varianten von Greiferköpfen, Plattenköpfen oder Jalousiegreiferköpfen gebildet sein kann. Zudem kann die Zwischenlage bzw. das Auflageelement wahlweise gleichzeitig mit dem Beschicken der Beladestation mit den gruppierten Artikel- oder Gebindelagen zugeführt werden. Ebenso möglich ist jedoch die Platzierung der Zwischenlage und anschließende Überführung der gruppierten Lagen in die Beladestation.

Der besondere Vorteil der erfindungsgemäßen Zuführung der flächigen Auflageelemente bzw. Zwischenlagen besteht darin, dass kein zusätzlicher Zeitaufwand für das Ablegen und Platzieren der Zwischenlagen auf einer Gebindelage erforderlich ist, da die Zwischenlage unmittelbar vor oder gleichzeitig mit dem Überschieben einer Gebindelage in einen Greiferkopf oder eine andere Beladestation in diesen geschoben wird, so dass die Gebindelage auf der Zwischenlage abgelegt wird. Zudem ermöglicht die erfindungsgemäße Anordnung eine besonders Platz sparende Bauweise, die keinen zusätzlichen Bauraum für die Handhabung und Ablage der Zwischenlagen benötigt. Schließlich sorgt die präzise Art der Zuführung der Zwischenlagen für die sehr exakte Zuordnung zu den Gebindelagen der zu stapelnden Palettenladungen.

Schließlich betrifft die vorliegende Erfindung ein Verfahren zum Palettieren von gruppierten Lagen von Gebinden und/oder Artikeln mit Hilfe einer Beladestation einer Transportvorrichtung, insbesondere nach ihrer Überführung in die Beladestation entsprechend einer der zuvor beschriebenen Ausführungsvarianten, bei dem die gruppierten Gebinde- bzw. Artikellagen, welche auf der Zwischenlage und innerhalb der Beladestation abgelegt sind, gleichzeitig transportiert werden. Auf diese Weise umfasst die vorliegende Erfindung auch solche Varianten, bei denen beispielsweise die Zwischenlage bzw. das Auflageelement vor der Zuführung der Gebindelage bereits in den Jalousiegreiferkopf eingelegt wurde. Bei dieser Variante würde man ebenso die Gebindelage gleichzeitig mit der Zwischenlage im Greiferkopf haben, jedoch würde man die Zwischenlage nicht während der Überführung der Gebindelage in den Kopf einbringen, sondern unmittelbar vorher. Vorzugsweise ist bei dem Verfahren vorgesehen, dass die auf der in der Beladestation befindlichen Zwischenlage abgelegten mindestens einen gruppierten Lage von Gebinden und/oder Artikeln gemeinsam mit der Zwischenlage palettiert und depalletiert werden können. Mit dieser Variante des Verfahrens sind sowohl das Palettieren wie auch das Depalettieren von Lagen inkl. Zwischenlagen abgedeckt.

Weitere Merkmale, Ziele und Vorteile der vorliegenden Erfindung gehen aus der folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt eine perspektivische Gesamtdarstellung einer aus dem Stand der Technik bekannten Vorrichtung zum Überführen von gruppierten Lagen von Gebinden und/oder Artikeln in eine Beladestation einer Transportvorrichtung.
Fig. 2 zeigt eine perspektivische Darstellung einer als Jalousiegreiferkopf ausgebildeten Beladestation mit einer Endloszuführung von Zwischenlagen, die von einer Rolle abgewickelt werden.
Fig. 3 zeigt eine schematische Darstellung zur Verdeutlichung des Überschubs einer Gebindelage in den Jalousiegreiferkopf unter gleichzeitiger Zuführung einer Zwischenlage.
Fig. 4 zeigt in einer schematischen Darstellung zwei palettierte Gebindelagen mit dazwischen angeordneter Zwischenlage.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung dar.

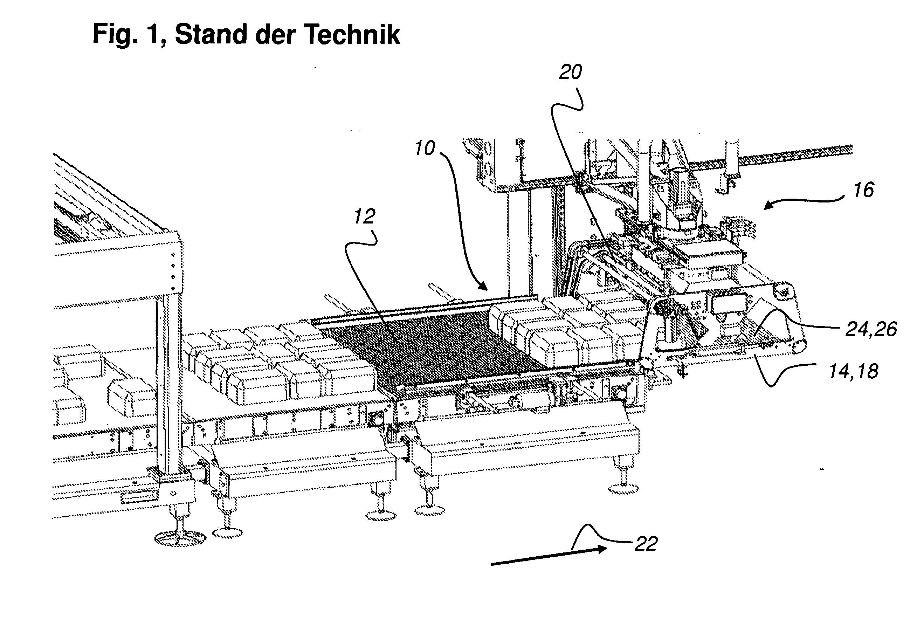

Die perspektivische Gesamtdarstellung der Fig. 1 zeigt eine aus dem Stand der Technik bekannte Vorrichtung zum Überführen von gruppierten Gebindelagen 10 mittels eines kontinuierlich antreibbaren Stetigförderers 12 in eine Beladestation 14 einer Transportvorrichtung 16. Die Beladestation 14, hier als ein Jalousiegreiferkopf 18 ausgestaltet, umfasst einen schwenkbaren Bügel 20, der zum Sichern der Gebindelagen 10 an der dem Stetigförderer 12 zugewandten Seite vorgesehen ist. Ferner beaufschlagt der schwenkbare Bügel 20 die bereits zumindest teilweise der Beladestation 14 zugeführten Gebindelagen 10 mit einer zusätzlichen Bewegungskomponente in Transportrichtung 22, um die zumindest teilweise in der Beladestation 14 bereits vorhandenen Gebindelagen 10 weiter beziehungsweise vollständig in den Jalousiekopf 18 zu schieben. In der Beladestation 14 ist eine Vielzahl von Rollen 24 vorgesehen, die das Überführen der Gebindelage 10 in die Beladestation 14 der Transportvorrichtung 16 erleichtern. Die Rollen 24 bilden eine Auflage für die jeweilige Gebindelage 10. Es ist dem Fachmann geläufig, dass der Jalousiekopf 18 vorzugsweise immer mindestens eine komplette Gebindelage 10 aufnimmt. Das Ablegen der aufgenommenen Lage oder Teillage erfolgt durch das mittige Öffnen des Förderteppichs 26 des Jalousiekopfs 18. Dies ist sehr Platz sparend, da seitlich keine Tragplatten oder Hilfsmittel aus dem Jalousiekopf 18 herausragen. Der Förderteppich 26 kann aus Rollen- oder Gliedersegmenten aufgebaut sein.

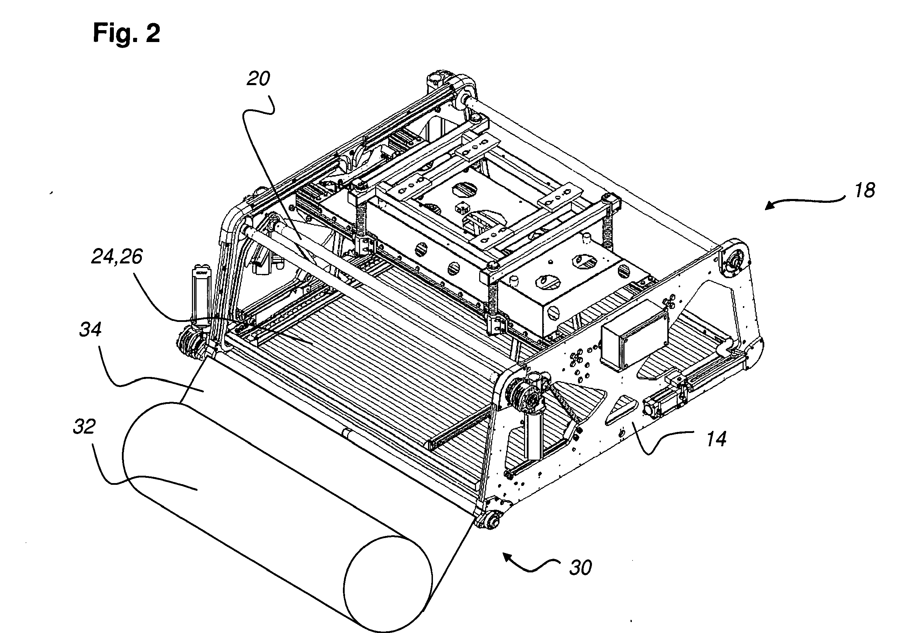

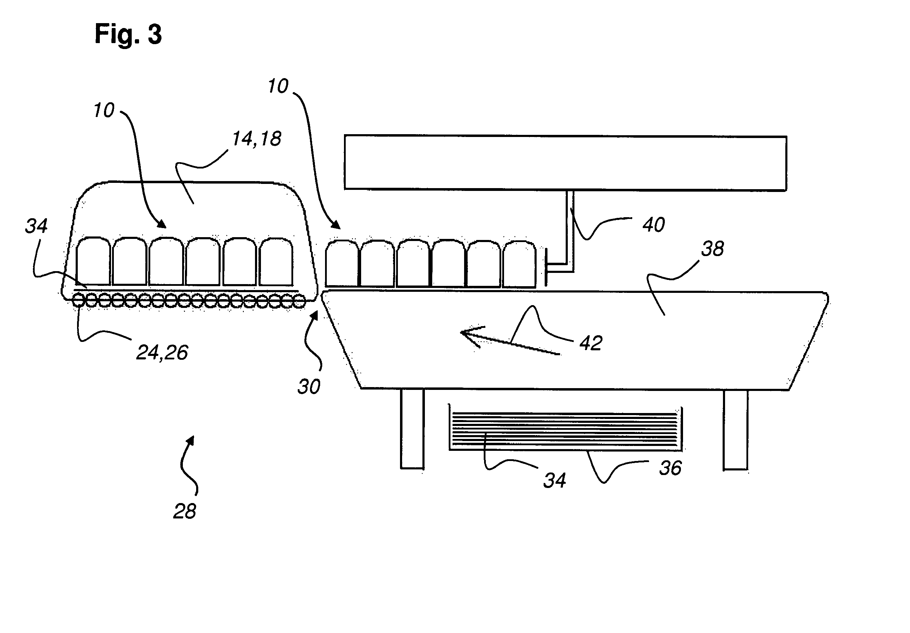

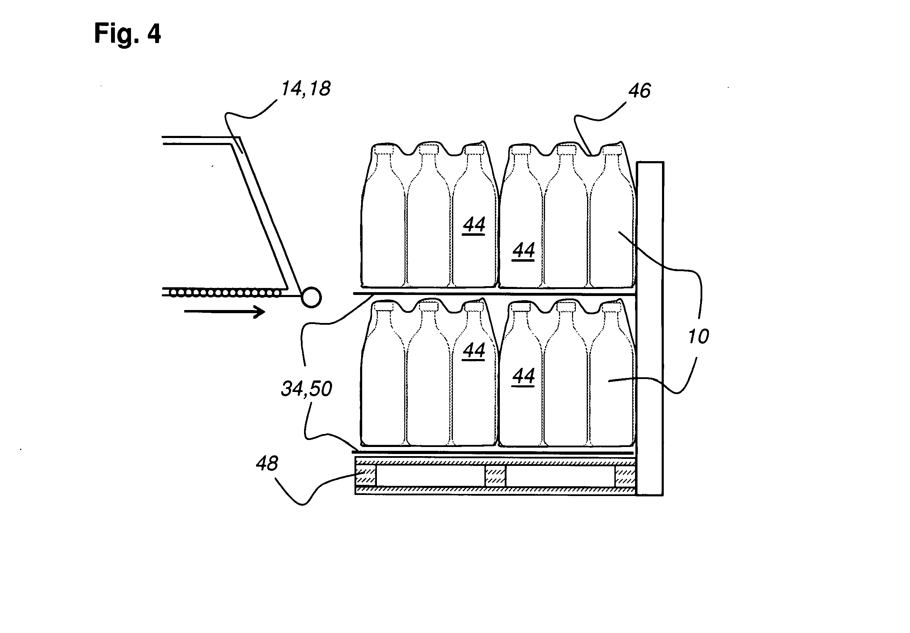

Die perspektivische Darstellung der Fig. 2 zeigt die als Jalousiegreiferkopf 18 ausgebildeten Beladestation 14 einer erfindungsgemäßen Vorrichtung 28 (vgl. Fig. 3), die zum Überführen von gruppierten Lagen 10 (vgl. Fig. 1) von Gebinden und/oder Artikeln in die Beladestation 14 der Transportvorrichtung 16 (vgl. Fig. 1) dient. Der während des Überschubs der Gebindelage 10 in den Jalousiegreiferkopf 18 offenen Vorderseite 30 ist eine Rolle 32 zur Abwicklung und Endloszuführung von Zwischenlagen 34 zugeordnet, die jeweils von der Rolle 32 abgewickelt, anschließend vereinzelt und dem Jalousiegreiferkopf 18 zugeführt werden. Wie mit der Fig. 2 angedeutet, befindet sich die Rolle 32 unterhalb eines Transportniveaus des Stetigförderers 12 (vgl. Fig. 1) bzw. eines Förderbandes und auch unterhalb des Auflageniveaus der Rollen 24, so dass die Zuführung der Zwischenlagen 34 sehr Platz sparend von unterhalb des Stetigförderers 12 nach schräg oben zum Jalousiegreiferkopf 18 erfolgen kann. Die Zwischenlagen 34 werden dabei vorzugsweise derart getaktet nach schräg oben zur Vorderseite 30 des Jalousiekopfes 18 und auf den Förderteppich 26 gefördert, dass die Zwischenlage 34 deckungsgleich mit der jeweiligen Gebindelage 10 platziert und gleichzeitig mit dieser auf die Rollen 24 geschoben wird, so dass die Gebindelage 10 nach dem Überschieben in den Jalousiegreiferkopf 18 vollständig auf der passend platzierten Zwischenlage 34 zum Liegen kommt und anschließend zusammen mit dieser palettiert werden kann (vgl. Fig. 4).

Die schematische Darstellung der Fig. 3 verdeutlicht anhand einer alternativen Ausführungsvariante der erfindungsgemäßen Vorrichtung 28 den Überschub einer Gebindelage 10 in den Jalousiegreiferkopf 18 unter gleichzeitiger Zuführung einer Zwischenlage 34 aus einem Magazin 36. In diesem Magazin 36 sind bereits passend zugeschnittene und dimensionierte Zwischenlagen 34 enthalten. Zudem ist das Magazin 36 in diesem Fall unterhalb der Fördereinrichtung 38 angeordnet. In der gezeigten Darstellung befindet sich bereits eine Gebindelage 10 im Jalousiegreiferkopf 18 und steht dabei auf einer Zwischenlage 34. Eine weitere Gebindelage 10 steht bereits auf der Fördereinrichtung 38 bereit zum Überschub in die Beladestation 14; sie kann bspw. mit einem geeigneten Schieber 40 in Richtung der Beladestation 14 geschoben werden. Im Bereich der Fördereinrichtung 38 befindet sich eine geeignete Zuführung 42 zur Entnahme einzelner Zwischenlagen 34 aus dem Magazin 36 und zu deren Überführung an den Randbereich und die Vorderseite 30 des Jalousiegreiferkopfes 18, damit sie vorzugsweise während des Überschubs der Gebindelage 10 von dieser erfasst und gleichzeitig mit ihr auf den Förderteppich 26 gezogen werden kann.

Die schematische Darstellung der Fig. 4 zeigt zwei palettierte Gebindelagen 10 mit dazwischen angeordneter Zwischenlage 34. Die Gebindelagen 10 umfassen mehrere Getränkebehälter 44, die mittels einer Schrumpffolie 46 umhüllt und in ihrer Lage zueinander fixiert sind. Die Gebindelagen 10 sind auf einer Palette 48 abgestellt, mit deren Hilfe die weitere Handhabung ermöglicht ist. Die Palettierung der Gebindelagen 10 erfolgt durch Platzierung der Beladestation 14 in passender Höhe und durch Öffnen des Förderteppichs 26, so dass die Gebindelage 10 mitsamt der Zwischenlage 34, auf der die Gebindelage 10 steht, von oben her auf die Palette 48 bzw. auf eine dort bereits stehende Gebindelage 10 aufgesetzt werden kann.

Die auch als flächiges Auflageelement 50 bezeichnete Zwischenlage 34 kann wahlweise durch einen Kartonbogen oder durch einen Folienbogen oder ein anderes geeignetes flächiges Element 50 gebildet sein.

Ein besonderer Vorteil der dargestellten Zuführung der flächigen Auflageelemente 50 bzw. Zwischenlagen 34 besteht darin, dass kein zusätzlicher Zeitaufwand für das Ablegen und Platzieren der Zwischenlagen 34 auf einer Gebindelage 10 erforderlich ist, da die Zwischenlage 34 gleichzeitig mit dem Überschieben einer Gebindelage 10 in den Greiferkopf 18 in diesen geschoben wird, so dass die Gebindelage 10 auf der Zwischenlage 34 abgelegt wird. Zudem ermöglicht die erfindungsgemäße Anordnung eine besonders Platz sparende Bauweise, die keinen zusätzlichen Bauraum für die Handhabung und Ablage der Zwischenlagen 34 benötigt.

### Bezuaszeichenliste:

- 10: Gebindelage
- 12: Stetigförderer
- 14: Beladestation
- 16: Transportvorrichtung
- 18: Jalousiegreiferkopf
- 20: Bügel
- 22: Transportrichtung
- 24: Rollen
- 26: Förderteppich
- 28: Vorrichtung
- 30: Vorderseite
- 32: Rolle
- 34: Zwischenlage
- 36: Magazin
- 38: Fördereinrichtung
- 40: Schieber
- 42: Zuführung
- 44: Getränkebehälter
- 46: Schrumpffolie
- 48: Palette
- 50: Flächiges Auflageelement

## Patentansprüche

1. Vorrichtung (28) zum Überführen von gruppierten Lagen (10) von Gebinden und/oder Artikeln in eine durch einen Jalousiegreiferkopf (18) gebildete Beladestation (14) einer Transportvorrichtung (16), welche Vorrichtung (28) eine Zuführeinrichtung (42) für eine Zwischenlage (34, 50) zur Anordnung unterhalb der jeweiligen Gebinde- bzw. Artikellage (10) bei deren Überführung in die Beladestation (14) aufweist, wobei der Jalousiegreiferkopf (18) eine Vielzahl von Rollen aufweist, die in der Beladestation (14) eine Auflage für die Zwischenlage (34, 50) sowie die jeweils darauf abgelegte Gebinde- bzw. Artikellage (10) bilden, so dass nach ihrer Überführung in die Beladestation (14) die gruppierte Gebinde- bzw. Artikellage (10) auf der Zwischenlage (34, 50) und innerhalb der Beladestation (14) abgelegt ist.

2. Vorrichtung nach Anspruch 1, bei der die Zwischenlage (34, 50) durch einen Kartonbogen oder durch einen Folienbogen gebildet ist.

3. Vorrichtung nach Anspruch 1 oder 2, die eine Rolle (32) zur Endloszuführung einer kontinuierlich abgewickelten Bahn aufweist und bei welcher der von der Rolle (32) abgewickelten Bahn eine Vereinzelungseinrichtung zur Abtrennung von flächigen Auflageelementen (50) in passender Größe vor deren Platzierung in der Beladestation (14) bzw. im Jalousiegreiferkopf (18) zugeordnet ist.

4. Vorrichtung nach Anspruch 1 oder 2, die ein Reservoir bzw. Magazin (36) mit einer Mehrzahl von flächigen Auflageelementen (50) passender Größe zu deren vereinzelter Zuführung zur Beladestation (14) bzw. zum Jalousiegreiferkopf (18) aufweist.

5. Vorrichtung nach einem der Ansprüche 1 bis 4, bei welcher die Zuführeinrichtung (42) für die Zwischenlagen (34, 50) unterhalb einer Transportebene für die gruppierten Gebinde- bzw. Artikellagen (10) angeordnet ist, wobei die Zuführrichtung für die Zwischenlagen (34, 50) in die Beladestation (14) bzw. den Jalousiegreiferkopf (18) einen spitzen Winkel mit einer Transportrichtung (22) der gruppierten Gebinde- bzw. Artikellagen (10) einschließt.

6. Verfahren zum Überführen von gruppierten Lagen (10) von Gebinden und/oder Artikeln in eine durch einen Jalousiegreiferkopf (18) gebildete Beladestation (14) einer Transportvorrichtung (16), wobei der Jalousiegreiferkopf (18) eine Vielzahl von Rollen aufweist, die in der Beladestation (14) eine Auflage für die Zwischenlage (34, 50) sowie die jeweils darauf abgelegte Gebinde- bzw. Artikellage (10) bilden und die gruppierten Gebinde- bzw. Artikellagen (10) im Zusammenhang mit ihrer Überführung in die Beladestation (14) auf eine Zwischenlage (34, 50) abgelegt werden, die unterhalb der jeweiligen Gebinde- bzw. Artikellage (10) angeordnet wird, wobei die Zwischenlage (34, 50) gemeinsam und annähernd gleichzeitig mit den gruppierten Gebinde- bzw. Artikellagen in die Beladestation eingebracht und überführt wird, und nach ihrer Überführung in die Beladestation (14) die gruppierte Gebinde- bzw. Artikellage (10) auf der Zwischenlage (34, 50) und innerhalb der Beladestation (14) abgelegt sind und gleichzeitig transportiert werden.

7. Verfahren nach Anspruch 6, bei dem die Zwischenlage (34, 50) in die Beladestation (14) eingebracht wird, bevor die gruppierten Gebinde- bzw. Artikellagen (10) in die Beladestation (14) überführt und auf die Zwischenlage (34, 50) abgelegt werden.

8. Verfahren nach Anspruch 6, bei dem die Zwischenlage (34, 50) gemeinsam und annähernd gleichzeitig mit den gruppierten Gebinde- bzw. Artikellagen (10) in die Beladestation (14) eingebracht und überführt wird.

9. Verfahren nach einem der Ansprüche 6 bis 8, bei dem die Zwischenlagen (34, 50) kontinuierlich von einer Rolle (32) abgewickelt und vor ihrer Platzierung in der Beladestation (14) bzw. in einem Jalousiegreiferkopf (18) vereinzelt werden.

10. Verfahren nach einem der Ansprüche 6 bis 8, bei dem die Zwischenlagen (34, 50) passender Größe einzeln aus einem Reservoir bzw. Magazin (36) entnommen und der Beladestation (14) bzw. dem Greiferkopf oder Jalousiegreiferkopf (18) zugeführt werden.

11. Verfahren nach einem der Ansprüche 6 bis 10, bei dem die Zwischenlagen (34, 50) von unterhalb einer Transportebene für die gruppierten Gebinde- bzw. Artikellagen (10) zugeführt werden, wobei eine Zuführrichtung für die Zwischenlagen (34, 50) in die Beladestation (14) bzw. den Jalousiegreiferkopf (18) einen spitzen Winkel mit einer Transportrichtung (22) der gruppierten Gebinde- bzw. Artikellagen (10) einschließt.

12. Verfahren zum Palettieren von gruppierten Lagen (10) von Gebinden und/oder Artikeln mit Hilfe einer Beladestation (14) einer Transportvorrichtung (16), insbesondere nach ihrer Überführung in die Beladestation (14) entsprechend einem der Ansprüche 6 bis 11, bei dem die gruppierten Gebinde- bzw. Artikellagen (10), welche auf der Zwischenlage (34) und innerhalb der Beladestation (14) abgelegt sind, gleichzeitig transportiert werden.

13. Verfahren nach Anspruch 12, bei dem die auf der in der Beladestation (14) befindlichen Zwischenlage (34) abgelegte mindestens eine gruppierte Lage (10) von Gebinden und/oder Artikeln gemeinsam mit der Zwischenlage (34) palettiert und depalletiert werden.

## Claims

1. A device (28) for transferring grouped layers (10) of bundles and/or articles into a loading station (14) of a transportation device (16), said loading station (14) being formed by a shutter-type gripper head (18), which device (28) comprises a feeder apparatus (42) for arrangement below the respective bundle or article layer (10) when transferring said layer (10) into the loading station (14), said feeder apparatus being intended for an intermediate layer (34, 50), wherein the shutter-type gripper head (18) comprises a plurality of rollers, which form a support in the loading station (14) for the intermediate layer (34, 50) and for the respective bundle or article layer (10) placed thereon so that after being transferred into the loading station (14), said grouped bundle or article layer (10) comes to be placed on the intermediate layer (34, 50) and within the loading station (14).

2. The device as recited in claim 1 wherein the intermediate layer (34, 50) is formed by a sheet of cardboard or a sheet of foil.

3. The device as recited in claim 1 or 2 comprising a roll (32) for an endless supply of a continuously dispensed web and wherein the web dispensed from the roll (32) is associated with a separating device for severing off planar support elements (50) in an appropriate size before said support elements (50) are placed in the loading station (14) or in the shutter-type gripper head (18).

4. The device as recited in claim 1 or 2 comprising a reservoir or magazine (36) with a plurality of appropriately sized planar support elements (50) for being separately fed to the loading station (14) or to the shutter-type gripper head (18).

5. The device as recited in one of the claims 1 to 4 wherein the feeder apparatus (42) for the intermediate layers (34, 50) is arranged below a transporting level of the grouped bundle or article layers (10) and wherein an acute angle is formed between the feed direction of the intermediate layers (34, 50) into the loading station (14) or into the shutter-type gripper head (18) and the transport direction (22) of the grouped bundle or article layers (10).

6. A method for transferring grouped layers (10) of bundles and/or articles into a loading station (14) of a transportation device (16), said loading station (14) being formed by a shutter-type gripper head (18), wherein the shutter-type gripper head (18) comprises a plurality of rollers, which form a support in the loading station (14) for the intermediate layer (34, 50) and for the respective bundle or article layer (10) placed thereon and wherein the grouped bundle or article layers (10) are placed on an intermediate layer (34, 50) in connection with being transferred into the loading station (14), which intermediate layer (34, 50) is arranged below the respective bundle or article layer (10), wherein the intermediate layer (34, 50) is introduced and transferred into the loading station (14) together and approximately simultaneously with the grouped bundle or article layers (10), and wherein the grouped bundle or article layer (10), after having been transferred into the loading station (14), comes to be placed on the intermediate layer (34, 50), both placed within the loading station (14) and being transported simultaneously.

7. The method as recited in claim 6 wherein the intermediate layer (34, 50) is brought into the loading station (14) before the grouped bundle or article layers (10) are transferred into the loading station (14) and placed onto the intermediate layer (34, 50).

8. The method as recited in claim 6 wherein the intermediate layer (34, 50) is introduced and transferred into the loading station (14) together and approximately simultaneously with the grouped bundle or article layers (10).

9. The method as recited in one of the claims 6 to 8 wherein the intermediate layers (34, 50) are continuously dispensed from a roll (32) and separated prior to being placed into the loading station (14) or into the shutter-type gripper head (18).

10. The method as recited in one of the claims 6 to 8 wherein the appropriately sized intermediate layers (34, 50) are individually retrieved from a reservoir or magazine (36) and fed to the loading station (14) or to the gripper head or shutter-type gripper head (18).

11. The method as recited in one of the claims 6 to 10 wherein the intermediate layers (34, 50) are fed from below a transporting level of the grouped bundle or article layers (10) and wherein an acute angle is formed between the feed direction of the intermediate layers (34, 50) into the loading station (14) or into the shutter-type gripper head (18) and the transport direction (22) of the grouped bundle or article layers (10).

12. A method for palletizing grouped layers (10) of bundles and/or articles by means of a loading station (14) of a transportation device (16), in particular after said grouped bundle or article layers (10) have been transferred into the loading station (14) according to one of the claims 6 to 11 wherein the grouped bundle or article layers (10), which have been placed on the intermediate layer (34) and within the loading station (14), are transported simultaneously.

13. The method as recited in claim 12 wherein the at least one grouped layer (10) of bundles and/or articles, which is placed on the intermediate layer (34) that is positioned on the loading station (14), is palletized and depalletized together with the intermediate layer (34).

## Revendications

1. Dispositif (28) destiné à transférer des couches groupées (10) de packs et/ou d'articles dans un poste de chargement (14) d'un dispositif de transport (16), qui est constitué par une tête de préhension à jalousie (18), lequel dispositif (28) présentant un dispositif d'amenée (42) pour une couche intermédiaire (34, 50) destinée à être disposée au-dessous de la couche respective de packs ou bien d'articles (10) lorsque celle-ci est transférée dans ledit poste de chargement (14), ladite tête de préhension à jalousie (18) présentant une pluralité de rouleaux qui constituent, dans le poste de chargement (14), un appui pour la couche intermédiaire (34, 50) ainsi que la couche de packs ou bien d'articles (10) qui est déposée respectivement sur celle-ci, de sorte que la couche groupée de packs ou bien d'articles (10), après avoir transféré celle-ci dans le poste de chargement (14), est déposée sur ladite couche intermédiaire (34, 50) et à l'intérieur du poste de chargement (14).

2. Dispositif selon la revendication 1, dans lequel ladite couche intermédiaire (34, 50) est formée par une feuille en carton ou par une feuille en film.

3. Dispositif selon la revendication 1 ou 2, qui présente un rouleau (32) pour l'alimentation sans fin d'une bande déroulée de façon continue et dans lequel un dispositif d'individualisation destiné à séparer des éléments d'appui (50) plans de taille adaptée avant de les placer dans ledit poste de chargement (14) ou bien dans ladite tête de préhension à jalousie (18) est associé à la bande déroulée du rouleau (32).

4. Dispositif selon la revendication 1 ou 2, qui présente un réservoir ou bien un magasin (36) avec une pluralité d'éléments d'appui (50) plans de taille adaptée pour amener ceux-ci de manière individualisée au poste de chargement (14) ou bien à ladite tête de préhension à jalousie (18).

5. Dispositif selon l'une quelconque des revendications 1 à 4, dans lequel ledit dispositif d'amenée (42) pour les couches intermédiaires (34, 50) est disposé au-dessous d'un plan de transport pour les couches groupées de packs ou bien d'articles (10), la direction d'amenée pour les couches intermédiaires (34, 50) dans ledit poste de chargement (14) ou bien ladite tête de préhension à jalousie (18) formant un angle aigu avec une direction de transport (22) des couches groupées de packs ou bien d'articles (10).

6. Procédé destiné à transférer des couches groupées (10) de packs et/ou d'articles dans un poste de chargement (14) d'un dispositif de transport (16), qui est constitué par une tête de préhension à jalousie (18), ladite tête de préhension à jalousie (18) présentant une pluralité de rouleaux qui constituent, dans le poste de chargement (14), un appui pour la couche intermédiaire (34, 50) ainsi que la couche de packs ou bien d'articles (10) qui est déposée respectivement sur celle, et les couches groupées de packs ou bien d'articles (10) étant déposées, en liaison avec leur transfert dans le poste de chargement (14), sur une couche intermédiaire (34, 50) qui sera disposée au-dessous de la couche respective de packs ou bien d'articles (10), ladite couche intermédiaire (34, 50) étant introduite et transférée dans ledit poste de chargement conjointement avec et approximativement en même temps que les couches groupées de packs ou bien d'articles, et les couches groupées de packs ou bien d'articles (10), après avoir transféré celles-ci dans le poste de chargement (14), étant déposées sur ladite couche intermédiaire (34, 50) et à l'intérieur du poste de chargement (14) et transportées en même temps.

7. Procédé selon la revendication 6, dans lequel la couche intermédiaire (34, 50) est introduite dans ledit poste de chargement (14) avant que les couches groupées de packs ou bien d'articles (10) soient transférées dans le poste de chargement (14) et déposées sur ladite couche intermédiaire (34, 50).

8. Procédé selon la revendication 6, dans lequel la couche intermédiaire (34, 50) est introduite et transférée dans ledit poste de chargement (14) conjointement avec et approximativement en même temps que les couches groupées de packs ou bien d'articles (10).

9. Procédé selon l'une quelconque des revendications 6 à 8, dans lequel lesdites couches intermédiaires (34, 50) sont déroulées de façon continue d'un rouleau (32) et sont individualisées avant d'être placées dans ledit poste de chargement (14) ou bien dans une tête de préhension à jalousie (18).

10. Procédé selon l'une quelconque des revendications 6 à 8, dans lequel les couches intermédiaires (34, 50) de taille adaptée sont prises de manière individuelle dans un réservoir ou bien un magasin (36) et sont amenées au poste de chargement (14) ou bien à la tête de préhension ou la tête de préhension à jalousie (18).

11. Procédé selon l'une quelconque des revendications 6 à 10, dans lequel les couches intermédiaires (34, 50) sont amenées d'en dessous d'un plan de transport pour les couches groupées de packs ou bien d'articles (10), une direction d'amenée pour les couches intermédiaires (34, 50) dans ledit poste de chargement (14) ou bien ladite tête de préhension à jalousie (18) formant un angle aigu avec une direction de transport (22) des couches groupées de packs ou bien d'articles (10).

12. Procédé pour palettiser des couches groupées (10) de packs et/ou d'articles à l'aide d'un poste de chargement (14) d'un dispositif de transport (16), en particulier après avoir transférées celles-ci dans ledit poste de chargement (14) conformément à l'une quelconque des revendications 6 à 11, dans lequel les couches groupées de packs ou bien d'articles (10) qui sont déposées sur la couche intermédiaire (34) et à l'intérieur du poste de chargement (14) sont transportées en même temps.

13. Procédé selon la revendication 12, dans lequel ladite au moins une couche groupée (10) de packs et/ou d'articles déposée sur la couche intermédiaire (34) située dans le poste de chargement (14) est palettisée et dépalettisée conjointement avec ladite couche intermédiaire (34).
